# EUROPÄISCHE PATENTANMELDUNG

(11) **EP 4 620 666 A1**
(43) Veröffentlichungstag der Anmeldung: **24.09.2025**
(21) Anmeldenummer: 25163941.5
(22) Anmeldetag: 14.03.2025
(51) Int. Cl.: B32B 5/02, B32B 7/12, B32B 27/12, E04F 21/165

(54) **REAKTIVES DICHTBAND FÜR DEN SANITÄRBEREICH**

(30) Priorität: 20.03.2024 DE 202024101403 U
(71) Anmelder: Oxiegen GmbH, 33175 Bad Lippspringe (DE)
(72) Erfinder: OVERKOTT, Philipp, 33449 Langenberg (DE)
(74) Vertreter: Wickord, Wiro

(57) **Zusammenfassung**

Die Erfindung betrifft ein reaktives Dichtband (1) für den Sanitärbereich, mit einer Tragschicht (2) aus einem dehnbaren und flexiblen Trägermaterial, wobei auf wenigstens einer Flachseite (4.1, 4.2) der Tragschicht (2) eine Schutzschicht (3, 3.1, 3.2) aus einem quellfähigen Material aufgebracht ist, wobei das quellfähige Material der Schutzschicht (3, 3.1, 3.2) bei Wasserkontakt selbstabdichtend ausgebildet ist, indem es das Wasser aufnimmt und damit eine wasserdichte Sperrschicht bildet.

## Beschreibung

Die Erfindung betrifft ein reaktives Dichtband für den Sanitärbereich, mit einer Tragschicht aus einem dehnbaren und flexiblen Trägermaterial.

Mit flexiblen Fugenmassen verschlossene Anschlussfugen im Fliesenbau gelten als Wartungsfugen, die beispielsweise aufgrund von Alterungseffekten von Zeit zu Zeit erneuert werden müssen. Im Rahmen der Erneuerung wird die Fugenmasse typischerweise aus der Fuge herausgeschnitten, sodass die Fuge danach erneut verfugt werden kann. Liegen diese Fugen in wasserbelasteten Bereichen von Bädern, Küchen und dergleichen, beispielsweise an Duschen, so liegt hinter den Fugen ein Dichtband der unter dem als Wand- und/oder Bodenbelag dienenden Fliesen ausgeführten Abdichtung. Beim Herausschneiden der zu entfernenden Fugenmasse kommt es daher immer wieder zum Durchtrennen der Dichtbänder und in der Folge zu Undichtigkeiten. Derartige Undichtigkeiten gilt es unbedingt zu vermeiden, da diese erhebliche Schäden verursachen können.

Um das Dichtband vor einer Beschädigung beim Erneuern der flexiblen Fugenmasse zu schützen, schlägt der Stand der Technik gegenwärtig einen Schnittschutz für das Dichtband vor. Der Schnittschutz wird hierbei aus einer Schnittschutzschicht oder überwiegend aus einem lediglich abschnittsweise vorgesehenen Schnittschutzstreifen aus einem schnittfesten Textilgewebe, beispielsweise aus Kevlar, oder aus einem Metallgewebe, beispielsweise einem Edelstahlgewebe, gebildet. Nachteilig ist hierbei, dass der Schnittschutz meist sehr steif und damit die Verarbeitung aufwendig ist. Zudem kommen für den Schnittschutz vergleichsweise teure Materialien zum Einsatz. Auch kann es beim Einsatz besonders scharfer Schneidwerkzeuge vereinzelt vorkommen, dass der Schnittschutz gleichwohl mit durchtrennt wird oder dass das Dichtband in einem Bereich außerhalb des Schnittschutzes beschädigt wird.

Aufgabe der vorliegenden Erfindung ist es daher, ein alternatives Dichtband für den Sanitärbereich anzugeben, welches einen verbesserten Schutz gegenüber Beschädigungen wie Schnitten und dergleichen aufweist.

Zur Lösung der Aufgabe ist die Erfindung in Verbindung mit dem Oberbegriff des Patentanspruchs 1 dadurch gekennzeichnet, dass auf wenigstens einer Flachseite der Tragschicht eine Schutzschicht aus einem quellfähigen Material aufgebracht ist. Das quellfähige Material der Schutzschicht ist bei Wasserkontakt selbstabdichtend ausgebildet, indem es das Wasser aufnimmt und damit eine wasserdichte Sperrschicht bildet.

Der besondere Vorteil der Erfindung besteht darin, dass durch die Schutzschicht mit dem quellfähigen Material das Dichtband gegenüber Beschädigungen wie insbesondere Schnitten, thermischen oder alterungsbedingten Rissen und dergleichen bei Kontakt mit einer Flüssigkeit, insbesondere Wasser, selbstheilend, also reaktiv ausgebildet ist. Bei Flüssigkeitskontakt quillt das quellfähige Material der Schutzschicht insoweit auf, dass Schnitte oder Löcher verschlossen werden und die Dichtwirkung des Dichtbands erhalten bleibt. Das reaktive Dichtband ist insofern bei Wasserkontakt selbstabdichtend, indem es das Wasser aufnimmt und damit eine wasserdichte Sperrschicht bildet. Die dehnbare und flexible Tragschicht ermöglicht eine flexible Einbeziehungsweise Anpassung des Dichtbands am jeweiligen Installationsort.

Das erfindungsgemäße Dichtband kommt bevorzugt im Sanitärbereich zum Einsatz, beispielsweise zum Ein- und Abdichten von Einbaugegenständen wie Dusch- oder Badewannen. Das Dichtband weist hierfür eine bevorzugte Breite im Bereich von 100 mm bis 200 mm und besonders im Bereich von 120 mm ± 1 mm auf. Darüber hinaus ist es auch für das Ein- und Abdichten von Objekten wie unter anderem Türzargen, Tür- und Fensterelementen, Tropfblechen und Abflussrinnen und -rohren in Feuchträumen sowie für den Einsatz in hochbeanspruchten Nassräumen und im Außenbereich, beispielsweise auf Balkonen oder Terrassen geeignet.

Neben der Aufnahme von Wasser ist das quellfähige Material auch in der Lage, viele weitere Flüssigkeiten, wie beispielsweise Öle, aufquellend zu absorbieren, solange diese Flüssigkeiten das quellfähige Material nicht zersetzen.

Kerngedanke der Erfindung ist es insofern, an wenigstens einer Flachseite der flexiblen und dehnbaren Tragschicht eine Schutzschicht aus einem quellfähigen Material vorzusehen. Das erfindungsgemäße Dichtband ist hierdurch reaktiv beziehungsweise selbstheilend beziehungsweise selbstabdichtend ausgebildet.

Nach einer bevorzugten Ausführungsform der Erfindung weist die Schutzschicht ein vorzugsweise dreidimensional vernetztes Polymer auf, welches in Gegenwart von Wasser aufquillt. Derartige Polymere werden auch als superabsorbierende Polymere, Hydrogele beziehungsweise hydrogel modifizierte Polymere bezeichnet. Sie sind hydrophil, aber wasserunlöslich. Bei Wasserkontakt quillen sie auf und absorbieren Wasser, wodurch eine dichte, gelförmige Sperrschicht gebildet ist. Diese Fähigkeit derartiger Polymere, Wasser beziehungsweise andere Flüssigkeiten zu absorbieren, ergibt sich aus hydrophilen funktionellen Gruppen, die an das Polymergerüst gebunden sind. Dadurch, dass diese Polymere dreidimensional vernetzt sind, findet während des Wasserkontakts eine Neuvernetzung statt, wodurch vorteilhaft die Dichtwirkung auch nach dem Austrocknen sowie bei Einwirkung mechanischer Belastung erhalten bleibt. Auch eine Hinterläufigkeit ist durch die aus dem quellfähigen Material gebildete Sperrschicht so gut wie ausgeschlossen.

Nach einer besonders bevorzugten Ausführungsform der Erfindung ist das quellfähige Material ein hydrogelartig modifiziertes, vorzugsweise mechanisch verfestigtes und thermofixiertes Polypropylen-Vlies. Polypropylen (PP) ist von Natur aus hydrophob und aufgrund seiner unpolaren beziehungsweise isotaktischen Struktur mit Methylgruppen kaum in der Lage, bei Kontakt mit Wasser aufzuquillen und das Wasser zu absorbieren. Insbesondere kristallines beziehungsweise isotaktisches PP, welches in der Industrie am häufigsten verwendet wird, weist besonders hydrophobe Eigenschaften auf. Für die nach der Erfindung vorgesehen wasserreaktiven beziehungsweise hydrogelen Eigenschaften wird daher ein entsprechend modifiziertes Polypropylen-Vlies benötigt. Diese Modifizierung kann beispielsweise durch Copolymerisation oder durch die Einbindung von hydrophilen funktionellen Gruppen an das Polypropylen-Polymergerüst erfolgen. Die vorteilhaften mechanischen Eigenschaften von unmodifiziertem Polypropylen können dabei weitestgehend erhalten und für das modifizierte Polypropylen-Vlies zu eigen gemacht werden: Polypropylen zeichnet sich besonders bevorzugt dadurch aus, dass es ein preiswert zu beschaffendes, einfach handhabbares Vliesgewebematerial geringer Dichte und mit hervorragenden mechanischen Eigenschaften, insbesondere einer hohen Zug- und Rissfestigkeit, Flexibilität und Bruchdehnung, ist. Ebenso verfügt PP über eine gute Temperatur-, Vibrations-, Säure- und Oxidationsbeständigkeit.

Nach einer Weiterbildung der Erfindung ist die Schutzschicht aus dem quellfähigen Material beidseitig, das heißt auf eine erste Flachseite und auf eine gegenüberliegende zweite Flachseite der Tragschicht aufgebracht. Insofern ist eine erste Schutzschicht aus dem quellfähigen Material auf die erste Flachseite und eine zweite Schutzschicht aus dem quellfähigen Material auf die gegenüberliegende zweite Flachseite der Tragschicht aufgebracht.

Nach einer alternativen Ausführungsform der Erfindung ist die erste Flachseite der Tragschicht mit der Schutzschicht aus dem quellfähigen Material und die gegenüberliegende zweite Flachseite der Tragschicht mit einer Vlieskaschierung aus einem nicht quellfähigen Material, vorzugsweise einem Polyethylen-Vlies, kaschiert. Diese Ausführungsform der Erfindung lässt sich mit reduzierten Materialkosten und einer reduzierten Dicke herstellen, da die zweite Flachseite mit einem preiswerten, dünnen Polyethylen-Vlies kaschiert ist. Das Polyethylen-Vlies eine besonders gute Haftung mit mineralischen Dichtschlämmen, insbesondere Fliesenkleber auf.

Nach einer besonders bevorzugten Ausführungsform der Erfindung ist das Trägermaterial der Tragschicht Polyethylen (PE) und vorzugsweise eine Folie aus Low-Density-Polyethylen (LDPE). Vorteilhaft weist LDPE eine niedrige Dichte und eine gute Temperaturbeständigkeit auf und ist flexibel, weich und dehnbar, sowohl in Längs- als auch in Querrichtung. Zudem handelt es sich bei LDPE um ein kratzfestes, stabiles und wasserundurchlässiges Tragmaterial für die Tragschicht.

Die Tragschicht weist vorzugsweise eine Stärke zwischen 100 µ und 400 µ und bevorzugt eine Stärke von etwa 200 µ auf. Insofern ist als Tragschicht bevorzugt ein starkes Folienmaterial (Stärke ≥ 100 µ) gewählt. Auf diese Weise ist das reaktive Dichtband einerseits ausreichend widerstandsfähig und stabil und anderseits flexibel und anpassungsfähig und damit einfach handhabbar und verarbeitbar.

Nach einer Weiterbildung der Erfindung ist die Schutzschicht vollflächig auf der wenigstens einen Flachseite der Tragschicht aufgebracht. Vorteilhaft ist damit eine vollflächige Schutzschicht entlang der gesamten Flachseite der Tragschicht bereitgestellt.

Nach einer Weiterbildung der Erfindung ist ein in eine Längsseite der Tragschicht mündender, vorzugsweise streifenförmiger erster Schutzschicht-Randbereich der Schutzschicht mit einer Klebeschicht bedeckt. Mittels der Klebeschicht kann das reaktive Dichtband an einen Einbaugegenstand, insbesondere an eine Abbordung einer Dusch- oder Badewanne, angebracht werden.

Nach einer alternativen Ausführungsform der Erfindung ist die Schutzschicht abschnittsweise auf der wenigstens einen Flachseite der Tragschicht so aufgebracht, dass ein in eine Längsseite der Tragschicht mündender, vorzugsweise streifenförmiger Flachseiten-Randbereich der Flachseite freigelassen ist. Die Schutzschicht ist insofern streifenförmig gegenüber der Tragschicht ausgespart, also nur abschnittsweise aufgebracht. Diese Ausführungsform kommt bevorzugt dann zur Anwendung, wenn auf die Flachseite der Tragschicht neben der Schutzschicht eine weitere Komponente aufgebracht ist.

Der freigelassene Flachseiten-Randbereich ist vorzugsweise mit der Klebeschicht bedeckt. Bevorzugt weisen der freigelassene Flachseiten-Randbereich und die Klebeschicht eine Breite von etwa 30 mm auf.

Nach einer Weiterbildung der Erfindung ist die Klebeschicht durch einen Butylklebestreifen oder bevorzugt durch ein Transferklebeband mit einem Dispersionsklebstoff auf Polyacrylatbasis bereitgestellt. Das Transferklebeband sieht doppelseitig einen Klebstofffilm vor, sodass es mit einer ersten Seite auf die Schutzschicht beziehungsweise auf den freigelassenen Flachseiten-Randbereich der Tragschicht aufgebracht werden kann.

Der Dispersionsklebstoff auf Polyacrylatbasis lässt sich dabei vorteilhaft einfach verarbeiten, er kann industriell aufgewalzt werden und ist zudem auf ökologischer Wasserbasis schnellaustrocknend. Besonders vorteilhaft ist hierbei, dass der Dispersionsklebstoff auf Polyacrylatbasis wasserfest und rissüberbrückend ist und somit hervorragend im Sanitärbereich einsetzbar ist.

Nach einer Weiterbildung der Erfindung ist die Klebeschicht mit einer abziehbaren Abdeckfolie überdeckt. Hierdurch ist die Klebeschicht bis zur Installation des Dichtbands am vorgesehenen Verwendungsort geschützt. Die Abdeckfolie kann hierfür einfach abgezogen werden, sodass die Klebeschicht freigelegt ist.

Nach einer Weiterbildung der Erfindung ist die abziehbare Abdeckfolie vorzugsweise zentripetal, das heißt zur Querschnittsmitte des Dichtbands hin mit einem Überstand von 2 mm bis 5 mm überlappend angeordnet. Der Überstand der Abdeckfolie hat den Vorteil, dass ein Abziehen derselben von der Klebeschicht vereinfacht ist. Die zentripetale Anordnung des Überstands reduziert das Verpackungsmaß des reaktiven Dichtbands und verhindert ein ungewolltes Ablösen der Abdeckfolie.

Nach einer besonders bevorzugten Ausführungsform der Erfindung erstreckt sich die Klebeschicht über etwa ein Viertel einer Querschnittsbreite der Tragschicht. Diese Dimensionierung der Klebeschicht hat sich für viele Anwendungsbereiche bewährt, insbesondere beim Abdichten von Fugen im Übergangsbereich zwischen einer Bade- oder Duschwanne und einer gefliesten Wand.

Nach einer Weiterbildung der Erfindung ist der freigelassene Flachseiten-Randbereich der Flachseite des Trägermaterials beziehungsweise der Schutzschicht-Randbereich der Schutzschicht mit einem Schallschutzstreifen bedeckt. Der Schallschutzstreifen ist bevorzugt lediglich einseitig vorgesehen, das heißt einer einzigen Flachseite der Tragschicht zugeordnet.

Vorzugsweise ist der Schallschutzstreifen an einem Randbereich des Dichtbands angeordnet und mündet in eine Längsseite der Tragschicht beziehungsweise des Dichtbands. Der Schallschutzstreifen verläuft dabei vorzugsweise streifenförmig und parallel zur Längsseite. Der Schallschutzstreifen kann aus einem selbstklebenden Material, beispielsweise Butyl beziehungsweise Butylkautschuk, gebildet oder mittels einer weiteren Klebeschicht aufgeklebt sein.

Vorzugsweise erstreckt sich der Schallschutzstreifen über etwa ein Viertel der Querschnittsbreite der Tragschicht.

Eine besonders bevorzugte Ausführungsform der Erfindung sieht vor, dass der Schallschutzstreifen und die Klebeschicht einander gegenüberliegenden Flachseiten der Tragschicht zugeordnet sind. Bevorzugt sind dabei die Klebeschicht und der Schallschutzstreifen bündig zu ein und derselben Längsseite der Tragschicht angeordnet.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Es zeigen:
- Fig. 1: ein erstes Ausführungsbeispiel eines erfindungsgemäßen reaktiven Dichtbands im Querschnitt,
- Fig. 2: ein zweites Ausführungsbeispiel eines erfindungsgemäßen reaktiven Dichtbands im Querschnitt,
- Fig. 3: ein drittes Ausführungsbeispiel eines erfindungsgemäßen reaktiven Dichtbands im Querschnitt,
- Fig. 4: ein viertes Ausführungsbeispiel eines erfindungsgemäßen reaktiven Dichtbands im Querschnitt,
- Fig. 5: ein fünftes Ausführungsbeispiel eines erfindungsgemäßen reaktiven Dichtbands im Querschnitt und
- Fig. 6: ein sechstes Ausführungsbeispiel eines erfindungsgemäßen reaktiven Dichtbands im Querschnitt.

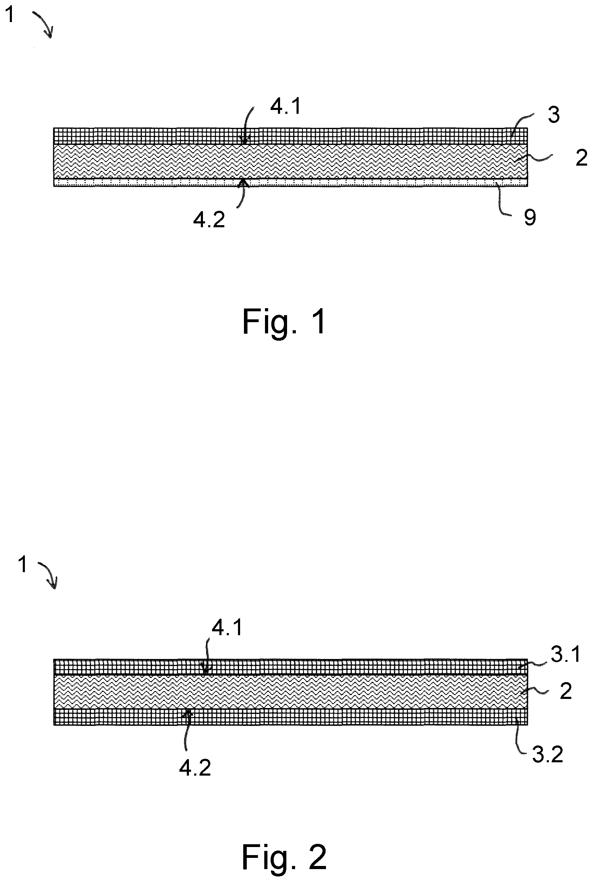

Die Fig. 1 bis Fig. 6 geben jeweils unterschiedliche Ausführungsbeispiele eines erfindungsgemäßen reaktiven Dichtbands 1 an.

Das reaktive Dichtband 1 ist insbesondere für die Verwendung in wasserbelasteten Bereichen, beispielsweise in Küchen und Bädern, vorgesehen und insbesondere für den Sanitärbereich zur rückseitigen Abdichtung von Anschlussfugen konzipiert. Derartige Anschlussfugen liegen beispielsweise zwischen dem Wannenrand beziehungsweise der Wannenabbordung von Dusch- und Badewannen und einer Anschlusswand beziehungsweise einem Anschlussboden vor. Das erfindungsgemäße reaktive Dichtband 1 kommt hierbei als ein Wannendichtband zum Einsatz.

Den figürlich dargestellten Ausführungsbeispielen des erfindungsgemäßen reaktiven Dichtbands 1 ist jeweils gemein, dass diese eine Tragschicht 2 aus einem vorzugsweise in Längs- als auch in Querrichtung dehnbaren und flexiblen Trägermaterial und mit zwei einander gegenüberliegenden Flachseiten 4.1, 4.2 aufweist, wobei auf zumindest einer der Flachseiten 4.1, 4.2 eine Schutzschicht 3. 3.1, 3.2 aus einem quellfähigen Material aufgebracht ist. Ein geeignetes Trägermaterial für die Tragschicht 2 ist eine Folie aus Low-Density-Polyethylen, vorzugsweise mit einer (Folien-)Stärke von etwa 200 µ.

Als quellfähiges Material für die wenigstens eine Schutzschicht 3. 3.1, 3.2 kommt bevorzugt ein Gelbildner beziehungswese Hydrogel zum Einsatz, welches bei Kontakt mit Wasser dieses derart absorbiert und dabei aufquillt, dass eine gelförmige wasserundurchlässige Sperrschicht gebildet ist. Das quellfähige Material ist bevorzugt ein dreidimensional vernetztes wasserreaktives Polymer, bevorzugt ein wasserreaktives Polypropylen-Vlies (PP-Vlies), welches sich bei Wasserzugabe neu vernetzt. Aufgrund dieser Eigenschaften verleiht die Schutzschicht 3. 3.1, 3.2 dem Dichtband 1 seine reaktive, selbstdichtende Eigenschaft. Das PP-Vlies ist bevorzugt mechanisch verfestigt und thermofixiert.

Wenn beispielsweise infolge des Entfernens einer zu ersetzenden Silikonfuge zwischen der Dusch- und Badewanne und einer Anschlusswand beziehungsweise einem Anschlussboden die Tragschicht 2 des reaktiven Dichtbands 1 beschädigt wird, beispielsweise durch ein Fugenmesser mit einem Schlitz versehen und dadurch wasserdurchlässig geworden ist, vernetzt sich die Schutzschicht 3. 3.1, 3.2 des reaktiven Dichtbands 1 bei Wasserzugabe auf Höhe des Schlitzes neu und quillt auf, wodurch auf Höhe des Schlitzes eine wasserundurchlässige Sperrschicht durch die Schutzschicht 3. 3.1, 3.2 gebildet ist. Das reaktive Dichtband 1 ist insofern auf Höhe der Beschädigung beziehungsweise des Schlitzes weiterhin wasserdicht ausgeführt.

Ein erstes Ausführungsbeispiel eines erfindungsgemäßen reaktiven Dichtbands 1 zeigt Fig. 1 im Querschnitt. Auf eine erste Flachseite 4.1 der Tragschicht 2 ist hier vollflächig die Schutzschicht 3 aus dem quellfähigen Material aufgebracht. An einer gegenüberliegenden zweiten Flachseite 4.2 ist die Tragschicht 2 mit einer Vlieskaschierung 9, vorzugsweise aus nicht quellfähigem Polyethylen-Vlies, kaschiert. Durch die hier einseitig vorgesehene Schutzschicht 3 ist das reaktive Dichtband 1 selbstheilend gegenüber Beschädigungen, wie beispielsweise Einschnitten und thermisch oder alterungsbedingten Rissen, in der Tragschicht 2 geschützt. Die gegenüberliegende Vlieskaschierung 9 stellt eine zugleich kostengünstige und gut mit beispielsweise Fliesenkleber beziehungsweise mineralischem Dichtschlamm vernetzbare, dünne Oberflächenschicht bereit.

Eine bevorzugte Installationsanordnung mit dem erfindungsgemäßen reaktiven Dichtband 1 nach Fig. 1 sieht vor, dass die Vlieskaschierung 9 einer Anschlusswand beziehungsweise einem Anschlussboden und die Schutzschicht 3 aus dem quellfähigen Material einer Anschlussfuge zugeordnet ist.

Ein zweites Ausführungsbeispiel eines erfindungsgemäßen reaktiven Dichtbands 1 ist in Fig. 2 angegeben. Hierbei ist im Unterschied zu dem Ausführungsbeispiel nach Fig. 1 die Tragschicht 2 beidseitig, das heißt an beiden aneinander gegenüberliegenden Flachseiten 4.1, 4.2 jeweils vollflächig mit jeweils einer Schutzschicht 3.1, 3.2 bedeckt. Demzufolge weist dieses Ausführungsbeispiel des reaktiven Dichtbands 1 eine besonders hohe Robustheit beziehungsweise eine besonders gute Selbstabdichtungsfunktion bei Wasserzugabe auf.

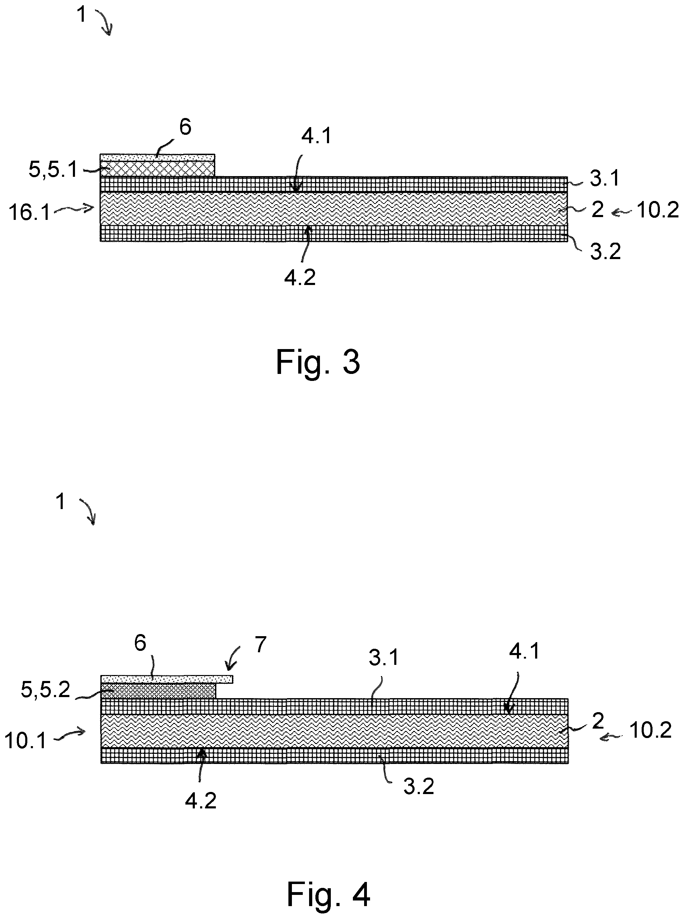

Fig. 3 gibt ein drittes Ausführungsbeispiel eines erfindungsgemäßen reaktiven Dichtbands 1 an. Hier ist im Unterschied zu dem Ausführungsbeispiel nach Fig. 2 auf einer ersten Schutzschicht 3 in einem Schutzschicht-Randbereich der Schutzschicht 3 zusätzlich eine Klebeschicht 5 durch ein Transferklebeband 5.1 mit einem Dispersionsklebstoff auf Polyacrylatbasis angebracht. Die Klebeschicht 5 erleichtert die Installation beziehungsweise Fixierung des reaktiven Dichtbands 1 am Installationsort. Die Klebeschicht 5 ist schützend mit einer abziehbaren Abdeckfolie 6 überdeckt und bündig zu einer ersten Längsseite 10.1 der Tragschicht 2 angeordnet.

Ein viertes Ausführungsbeispiel des erfindungsgemäßen reaktiven Dichtbands 1 ist in Fig. 4 angegeben. Im Unterschied zu dem Ausführungsbeispiel nach Fig. 3 ist hier die Klebeschicht 5 durch ein Butylklebestreifen 5.2 bereitgestellt. Zudem ist die Abdeckfolie 6 hier zur Querschnittsmitte des Dichtbands 1 hin gegenüber der Klebeschicht 5 leicht überlappend angeordnet, wodurch ein Abziehen der Abdeckfolie 6 vereinfacht ist. Die Überlappungslänge beträgt bevorzugt zwischen 2 mm und 7 mm.

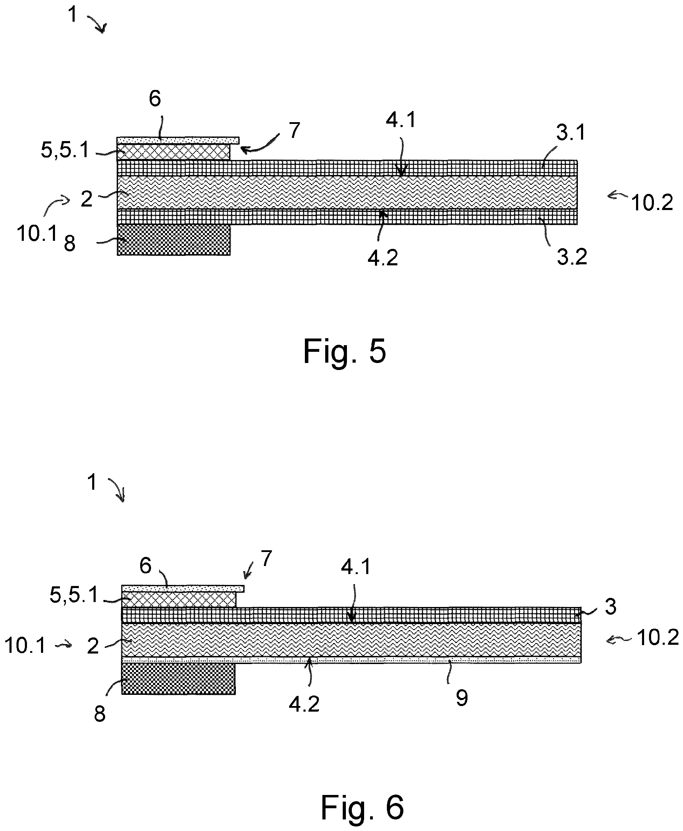

Die Fig. 5 gibt ein fünftes Ausführungsbeispiel des erfindungsgemäßen reaktiven Dichtbands 1 an. Dieses sieht gegenüber dem Ausführungsbeispiel nach Fig. 4 zusätzlich einen Schallschutzstreifen 8 vor, zudem ist die Klebeschicht 5 hier durch das Transferklebeband 5.1 mit dem Dispersionsklebstoff auf Polyacrylatbasis bereitgestellt. Der Schallschutzstreifen 8 ist auf gleicher Höhe zu der Klebeschicht 5 angeordnet und wie diese bündig zu der ersten Längsseite 10.1 der Tragschicht 2 angeordnet.

Ein sechstes Ausführungsbeispiel des erfindungsgemäßen reaktiven Dichtbands 1 gibt Fig. 6 an. Im Unterschied zu dem Ausführungsbeispiel nach Fig. 5 ist hier anstelle einer zweiten Schutzschicht 3.2 an der zweiten Flachseite 4.2 der Tragschicht 2 die Vlieskaschierung 9 vorgesehen.

In den Ausführungsbeispielen des erfindungsgemäßen reaktiven Dichtbands 1 gemäß den Fig. 3 bis 6 erstreckt sich die Klebeschicht 5 beziehungsweise der Schallschutzstreifen 8 jeweils über etwa ein Viertel der Querschnittsbreite der Tragschicht 2. Hiervon abweichende Proportionen und Anordnungen der Komponenten sind gleichwohl unter Beibehaltung der erfinderischen Idee denkbar.

Eine bevorzugte Installationsanordnung mit dem erfindungsgemäßen reaktiven Dichtband 1 nach Fig. 3 bis Fig. 6 sieht vor, dass das Dichtband 1 mit der Klebeschicht 5 unterhalb der Anschlussfuge an einen Einbaugegenstand, beispielsweise an einen Wannenrand beziehungsweise eine Wannenabbordung einer Dusch- oder Badewanne, angeklebt ist. Die Abdeckfolie 6 ist hierfür selbstverständlich vorab entfernt worden, sodass die Klebeschicht 5 freigelegt ist. Die der Klebeschicht 5 gegenüberliegende zweite Schutzschicht 3.2 beziehungsweise die Vlieskaschierung 9 ist einer Anschlusswand beziehungsweise einem Anschlussboden zugeordnet oder daran angelegt, ebenso wie der in den Ausführungsbeispielen gemäß Fig. 5 oder Fig. 6 zusätzlich vorgesehene Schallschutzstreifen 8.

Das erfindungsgemäße reaktive Dichtband 1 ist selbstverständlich nicht auf die figürlich dargestellten Ausführungsbeispiele beschränkt. Alternative Ausführungsbeispiele sind grundsätzlich denkbar. Beispielsweise sind die Dimensionierung, Anordnung und Materialauswahl der einzelnen Komponenten des reaktiven Dichtbands 1 in weiten Grenzen frei wählbar.

Es ist ferner denkbar, dass das reaktive Dichtband 1 um weitere, figürlich nicht dargestellte Komponenten beziehungsweise Schichten ergänzt ist.

Gleiche Bauteile und Bauteilfunktionen sind durch gleiche Bezugszeichen gekennzeichnet.

### Bezugszeichenliste

- 1: reaktives Dichtband
- 2: Tragschicht
- 3: Schutzschicht
- 3.1: erste Schutzschicht
- 3.2: zweite Schutzschicht
- 4.1: erste Flachseite
- 4.2: zweite Flachseite
- 5: Klebeschicht
- 5.1: Transferklebeband
- 5.2: Butylklebestreifen
- 6: Abdeckfolie
- 7: Überstand
- 8: Schallschutzstreifen
- 9: Vlieskaschierung
- 10.1: erste Längsseite
- 10.2: zweite Längsseite

## Patentansprüche

1. Reaktives Dichtband (1) für den Sanitärbereich, mit einer Tragschicht (2) aus einem dehnbaren und flexiblen Trägermaterial, **dadurch gekennzeichnet, dass** auf wenigstens einer Flachseite (4.1, 4.2) der Tragschicht (2) eine Schutzschicht (3, 3.1, 3.2) aus einem quellfähigen Material aufgebracht ist, wobei das quellfähige Material der Schutzschicht (3, 3.1, 3.2) bei Wasserkontakt selbstabdichtend ausgebildet ist, indem es das Wasser aufnimmt und damit eine wasserdichte Sperrschicht bildet.

2. Reaktives Dichtband (1) nach Anspruch 1, **dadurch gekennzeichnet, dass** die Schutzschicht (3, 3.1, 3.2) als quellfähiges Material ein in Gegenwart von Wasser aufquellendes und bevorzugt dreidimensional vernetztes Polymer, insbesondere ein Hydrogel, aufweist.

3. Reaktives Dichtband (1) nach Anspruch 2, **dadurch gekennzeichnet, dass** das quellfähige Material ein hydrogelartig modifiziertes und vorzugsweise mechanisch verfestigtes und thermofixiertes Polypropylen-Vlies ist.

4. Reaktives Dichtband (1) nach einem der Ansprüche 1 bis 3, **dadurch gekennzeichnet, dass** eine erste Flachseite (4.1) der Tragschicht (2) mit der Schutzschicht (3, 3.1) aus dem quellfähigen Material und eine der ersten Flachseite (4.1) gegenüberliegende zweite Flachseite (4.2) der Tragschicht (2) mit einer Vlieskaschierung (9) aus einem nicht quellfähigen Material, vorzugsweise einem Polyethylen-Vlies, kaschiert ist.

5. Reaktives Dichtband (1) nach einem der Ansprüche 1 bis 3, **dadurch gekennzeichnet, dass** eine erste Schutzschicht (3.1) aus dem quellfähigen Material auf eine erste Flachseite (4.1) und eine zweite Schutzschicht (3.2) aus dem quellfähigen Material auf eine gegenüberliegende zweite Flachseite (4.2) der Tragschicht (2) aufgebracht ist.

6. Reaktives Dichtband (1) nach einem der Ansprüche 1 bis 5, **dadurch gekennzeichnet, dass** das Trägermaterial der Tragschicht (2) Polyethylen und vorzugsweise eine Folie aus Low-Density-Polyethylen ist.

7. Reaktives Dichtband (1) nach einem der Ansprüche 1 bis 6, **dadurch gekennzeichnet, dass** die Tragschicht (2) eine Stärke zwischen 100 µ und 400 µ und bevorzugt eine Stärke von etwa 200 µ aufweist.

8. Reaktives Dichtband (1) nach einem der Ansprüche 1 bis 7, **dadurch gekennzeichnet, dass** die Schutzschicht (3, 3.1, 3.2) vollflächig auf der wenigstens einen Flachseite (4.1, 4.2) der Tragschicht (2) aufgebracht ist.

9. Reaktives Dichtband (1) nach einem der Ansprüche 1 bis 8, **dadurch gekennzeichnet, dass** die Schutzschicht (3, 3.1, 3.2) abschnittsweise auf der wenigstens einen Flachseite (4.1, 4.2) der Tragschicht (2) so aufgebracht ist, dass ein in eine Längsseite (10.1, 10.2) der Tragschicht (2) mündender, vorzugsweise streifenförmiger Flachseiten-Randbereich der Flachseite (4.1, 4.2) freigelassen ist.

10. Reaktives Dichtband (1) nach Anspruch 9, **dadurch gekennzeichnet, dass** der freigelassene Flachseiten-Randbereich mit einer Klebeschicht (5) bedeckt ist.

11. Reaktives Dichtband (1) nach einem der Ansprüche 1 bis 10, **dadurch gekennzeichnet, dass** ein in eine Längsseite (10.1, 10.2) der Tragschicht (2) mündender, vorzugsweise streifenförmiger erster Schutzschicht-Randbereich der Schutzschicht (3, 3.1, 3.2) mit der Klebeschicht (5) bedeckt ist.

12. Reaktives Dichtband (1) nach Anspruch 10 oder 11, **dadurch gekennzeichnet, dass** die Klebeschicht (5) durch einen Butylklebestreifen (5.2) oder bevorzugt durch ein Transferklebeband (5.1) mit einem Dispersionsklebstoff auf Polyacrylatbasis bereitgestellt ist.

13. Reaktives Dichtband (1) nach Anspruch 10 oder 11, **dadurch gekennzeichnet, dass** die Klebeschicht (5) mit einer abziehbaren Abdeckfolie (6) überdeckt ist.

14. Reaktives Dichtband (1) nach Anspruch 13, **dadurch gekennzeichnet, dass** die abziehbare Abdeckfolie (6), vorzugsweise zentripetal mit einem Überstand (7) von 2 mm bis 5 mm, überlappend angeordnet ist.

15. Reaktives Dichtband (1) nach Anspruch 9, **dadurch gekennzeichnet, dass** der Flachseiten-Randbereich mit einem Schallschutzstreifen (8) bedeckt ist.

16. Reaktives Dichtband (1) nach einem der Ansprüche 1 bis 14, **dadurch gekennzeichnet, dass** an höchstens einer einzigen Schutzschicht (3, 3.1, 3.2) ein Schallschutzstreifen (8) aufgebracht ist, vorzugsweise auf einen Schutzschicht-Randbereich der Schutzschicht (3, 3.1, 3.2), welcher in eine Längsseite (10.1, 10.2) der Tragschicht (2) mündet.

17. Reaktives Dichtband (1) nach einem der Ansprüche 10 bis 16, **dadurch gekennzeichnet, dass** sich die Klebeschicht (5) über etwa ein Viertel und/oder der Schallschutzstreifen (8) über etwa ein Viertel einer Querschnittsbreite der Tragschicht (2) erstrecken.

18. Reaktives Dichtband (1) nach einem der Ansprüche 15 bis 17, **dadurch gekennzeichnet, dass** der Schallschutzstreifen (8) und die Klebeschicht (5) einander gegenüberliegenden Flachseiten (4.1, 4.2) der Tragschicht (2) zugeordnet sind und/oder jeweils bündig zu ein und derselben Längsseite (10.1, 10.2) der Tragschicht (2) angeordnet sind.
